# EUROPEAN PATENT APPLICATION

(11) **EP 1 708 155 A2**
(43) Date of publication of application: **04.10.2006**
(21) Application number: 06111386.6
(22) Date of filing: 20.03.2006
(51) Int. Cl.: G09G 3/22

(54) **Electron emission display device and method of controlling the same**

(30) Priority: 29.03.2005 KR 2005026170
(71) Applicant: Samsung SDI Co., Ltd., Suwon-si Gyeonggi-do (KR)
(72) Inventor: Cho, Duck Gu Legal & IP Team,, Kiheung-eup, Yongin-si, Gyeonggi-do (KR)
(74) Representative: Hengelhaupt, Jürgen

(57) **Abstract**

An electron emission display device and a method of controlling the same, in which a voltage applied between a cathode electrode and a gate electrode is controlled corresponding to a current in an anode electrode. The electron emission display device includes a display region including a anode electrode, and a plurality of electron emission devices disposed at electron emission regions; a data driver for supplying a data signal corresponding to video data to a plurality of data lines; a scan driver for supplying scan signals to a plurality of scan lines; a power supply for supplying power to the data driver and the scan driver; a current measuring device for measuring a current in the anode electrode; and a voltage level controller for controlling a voltage difference between a cathode electrode and a gate electrode of the electron emission device on a basis of the current.

## Description

### BACKGROUND

### 1. Field of the Invention

The present invention relates to an electron emission display device and a method of controlling the same, and more particularly, to an electron emission display device and a method of controlling the same, in which a voltage applied between a cathode electrode and a gate electrode is controlled corresponding to a current flowing in an anode electrode.

### 2. Discussion of Related Art

An electron emission display device includes electron emission devices corresponding to pixels. In the electron emission device, electrons are emitted from a cathode electrode in correspondence to a voltage applied to the cathode electrode and a gate electrode, and then accelerated toward a fluorescent material by a voltage applied to an anode electrode, thereby emitting light. Generally, the electron emission device is classified into a thermionic cathode type or a cold cathode type, wherein the thermionic cathode type and the cold cathode type employ a thermionic cathode and a cold cathode, respectively, as an electron emission source.

A cold cathode type electron emission device includes a structure such as a field emitter array (FEA), a surface conduction emitter (SCE), a metal insulator metal (MIM), a metal insulator semiconductor (MIS), a ballistic electron surface emitting (BSE), etc.

The electron emission device having the FEA structure is based on a principle that a material having a low work function and a high β-function is employed as the electron emission source and emits electrons due to electric field difference in a vacuum. Such an FEA electron emission device includes the electron emission source having a sharp pointed tip and made of a carbon material or a nano material.

The electron emission device having the SCE structure is provided with an electron emission portion, in which two electrodes are opposite to each other and formed on a plate and a conductive layer is formed between the two electrodes, wherein the conductive layer is formed with a minute crack or gap, thereby forming the electron emission portion. Such an SCE electron emission device is based on a principle that the electron emission portion formed by the minute crack or gap emits electrons when voltage is applied between two electrodes and an electrical current flows through a surface of the conductive thin layer.

The electron emission device having the MIM or MIS structure includes an electron emission portion having a metal-insulator-metal structure or a metal-insulator-semiconductor structure and is based on a principle that electrons are emitted from a metal or a semiconductor of high electric potential and accelerated toward a metal of low electric potential when a voltage is applied between the metal and the metal or between the metal and the semiconductor.

The electron emission device having the BSE structure is based on a principle that electrons travel without sputtering when the size of a semiconductor is smaller than a mean free path of the electrons contained in the semiconductor. Such a BSE electron emission device includes an electron supplying layer made of a metal or a semiconductor and formed on an ohmic electrode, an insulator formed on the electron supplying layer, and a thin metal layer formed on the insulator, so that the electrons are emitted when a voltage is applied between the ohmic electrode and the thin metal layer.

In the electron emission display device, if the amount of electrons emitted from the cathode electrode of each pixel is increased by increasing the voltage difference between the cathode electrode and the gate electrode, the brightness and the contrast are improved. However, when the amount of electrons emitted from the cathode electrode is increased, the electron emission device is more rapidly deteriorated and power consumption increases. On the other hand, in the electron emission display device, if the amount of electrons emitted from the cathode electrode of each pixel is decreased by decreasing the voltage difference between the cathode electrode and the gate electrode, the electron emission device lasts for a relatively long time and the power consumption decreases. However, when the amount of electrons emitted from the cathode electrode is decreased, the brightness and the contrast are lowered.

### SUMMARY OF THE INVENTION

Accordingly, it is an aspect of the present invention to provide an electron emission display device and a method of controlling the same, in which a voltage applied between a cathode electrode and a gate electrode is controlled corresponding to a current in an anode electrode, so that contrast becomes higher when video data has a low gray level, power consumption is limited, and rapid deterioration of an electron emission device is reduced or prevented when the video data has a high gray level.

According to one aspect of the invention an electron emission display device is disclosed, the electron emission display device comprising: a display region comprising an anode electrode, and a plurality of electron emission devices disposed at electron emission regions defined by a plurality of data lines and a plurality of scan lines; a data driver for supplying a data signal corresponding to video data to the plurality of data lines; a scan driver for supplying scan signals to the plurality of scan lines; a power supply for supplying power to the data driver and the scan driver; a current measuring device for measuring a current in the anode electrode; and a voltage level controller for controlling a voltage difference between a cathode electrode and a gate electrode of at least one of the electron emission devices on a basis of the current.
Preferably the voltage difference is controlled by varying at least one of a voltage applied to the cathode electrode or a voltage applied to the gate electrode on the basis of the current. Preferably the voltage difference is controlled to be lowered as the current becomes higher. Preferably the voltage difference is controlled to be lowered as the current becomes higher. Preferably the voltage level controller controls the power supplied from the power supply to have a voltage level corresponding to the current, and at least one of the data driver or the scan driver varies the voltage level of the data signal and/or the scan signal on a basis of a voltage variation of the supplied power. Preferably the voltage level controller controls the power supplied from the power supply to have a voltage level corresponding to the current, and at least one of the data driver or the scan driver varies the voltage level of the data signal and/or the scan signal on a basis of a voltage variation of the supplied power. Preferably the data driver supplies the data signal allowing an electron emission period of the at least one of the electron emission devices to be determined corresponding to the video data. Preferably the data driver supplies the data signal allowing an electron emission period of the at least one of the electron emission devices to be determined corresponding to the video data. Preferably the data signal is obtained by applying pulse width modulation to the video data. Preferably the data signal is obtained by applying pulse width modulation to the video data. Preferably one of the data lines corresponds to one of the cathode electrode and the gate electrode, and one of the scan lines corresponds to the other one of the cathode electrode and the gate electrode. Preferably the data line corresponds to one of the cathode electrode and the gate electrode, and the scan line corresponds to the other one of the cathode electrode and the gate electrode.

According to another aspect of the invention an electron emission display device is disclosed, the electron emission display device comprising: a display region comprising an anode electrode, and a plurality of electron emission devices disposed at electron emission regions defined by a plurality of data lines and a plurality of scan lines; a data driver for supplying a data signal corresponding to video data to the plurality of data lines; a scan driver for supplying scan signals to the plurality of scan lines; a power supply for supplying power to the data driver and the scan driver; a current measuring device for measuring a current in the anode electrode; and a voltage level controller for controlling a voltage level of the power supplied from the power supply to at least one of the data driver or the scan driver to be varied on a basis of the current.
Preferably the voltage level controller comprises: a low pass filter to filter a high frequency band signal from the current; a voltage level determiner to control the power supply in correspondence to the current passed through the low pass filter. Preferably the data driver adjusts a voltage level of the data signal on a basis of the power supplied from the power supply. Preferably the data driver comprises: a serial-parallel converter adapted to convert the video data inputted in sequence into parallel video data; a pulse width modulator adapted to modulate a pulse width of the parallel video data; and a level adjuster adapted to adjust a voltage level of the data signal outputted from the pulse width modulator according to the power supplied from the power supply, and output the data signal having the adjusted voltage level to at least one of the data lines. Preferably the scan driver adjusts a voltage level of at least one of the scan signals on a basis of the power supplied from the power supply. Preferably the scan driver comprises: a shift register adapted to output the scan signals; and a level adjuster adapted to adjust a voltage level of the scan signals outputted from the shift register on a basis of the power supplied from the power supply, and output the scan signals having the adjusted voltage level to at least one of the scan lines.

According to still another aspect of the invention, a method of controlling an electron emission display device is disclosed, the method comprising: measuring a current in an anode electrode; and adjusting a voltage difference between a cathode electrode and a gate electrode of an electron emission device on a basis of the current.
Preferably the step of adjusting a voltage difference comprises: supplying power having a voltage level corresponding to the current to at least one of a data driver or a scan driver; and allowing at least one of the data driver or the scan driver to adjust the voltage difference on a basis of the supplied power. Preferably the step of adjusting a voltage difference comprises: filtering the current through a low pass filter; supplying power having a voltage level corresponding to the current passed through the low pass filter to at least one of a data driver or a scan driver; and allowing at least one of the data driver or the scan driver to adjust the voltage difference on a basis of the supplied power. Preferably the voltage difference is controlled to become larger when the current is low, and the voltage difference is controlled to become smaller when the current is high. Preferably the voltage difference is controlled by varying at least one of a voltage applied to the gate electrode or a voltage applied to the cathode electrode on the basis of the current. Preferably one of a data signal and a scan signal is applied to the gate electrode, and the other one is applied to the cathode electrode. Preferably the data signal is obtained by applying pulse width modulation to the video data.

### BRIEF DESCRIPTION OF THE DRAWINGS

These and/or other aspects and features of the invention will become apparent and more readily appreciated from the following description of exemplary embodiments, taken in conjunction with the accompanying drawings of which:

FIG. 1 illustrates an electron emission display device according to an embodiment of the present invention;

FIG. 2 is a partial sectional view of a display region employed in the electron emission display device according to an embodiment of the present invention;

FIG. 3 is a block diagram of a data driver employed in the electron emission display device according to an embodiment of the present invention;

FIG. 4 is a block diagram of a scan driver employed in the electron emission display device according to an embodiment of the present invention;

FIG. 5 is a block diagram of a voltage level controller employed in the electron emission display device according to an embodiment of the present invention;

FIGs. 6 through 8 are timing diagrams illustrating a data signal and a scan signal corresponding to currents in the case where a cathode electrode is used as a data line and a gate electrode is used as a scan line in the electron emission display device according to an embodiment of the present invention; and

FIG. 9 is a control flowchart of the electron emission display device according to an embodiment of the present invention.

### DETAILED DESCRIPTION

Hereinafter, exemplary embodiments according to the present invention will be described with reference to the accompanying drawings, wherein the exemplary embodiments of the present invention are provided to be readily understood by those skilled in the art.

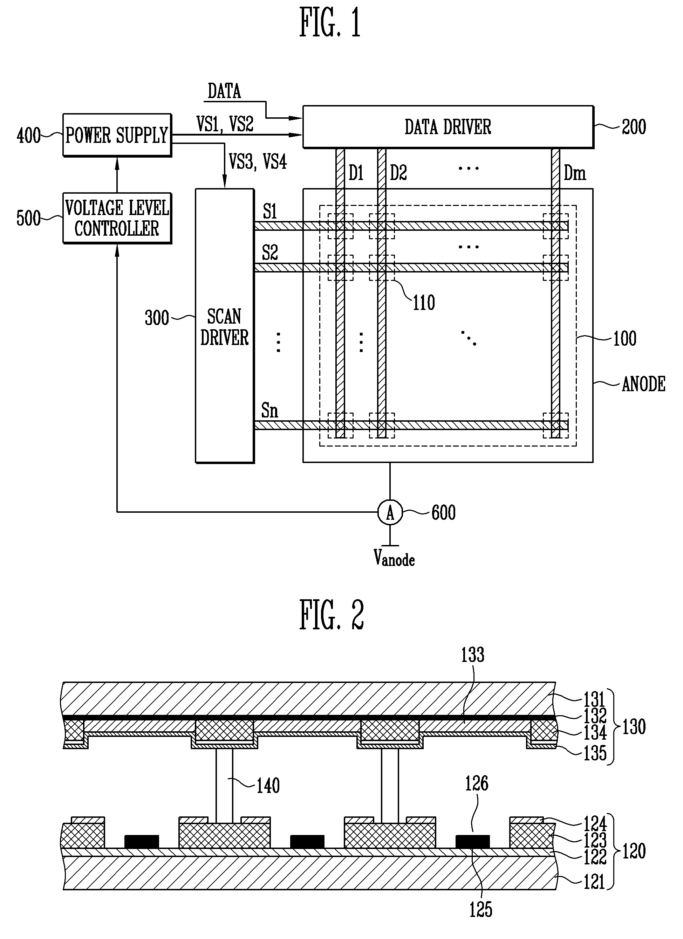

FIG. 1 illustrates an electron emission display device according to an embodiment of the present invention. Referring to FIG. 1, an electron emission display device according to an embodiment of the present invention includes a display region 100, a data driver 200, a scan driver 300, a power supply 400, a current measuring device 600, and a voltage level controller 500.

The display region 100 includes n scan lines S1, S2, ..., Sn; m data lines D1, D2, ..., Dm; and an anode electrode ANODE. Here, the scan lines S1, S2, ..., Sn and the data lines D1, D2, ..., Dm are formed to cross with (or cross over) each other. As shown in FIG. 1, the anode electrode ANODE can be formed throughout the display region 100, but not limited thereto. Alternatively, the anode electrode may be formed as a plurality of stripes in a row direction like the scan lines, as a plurality of stripes in a column direction like the data lines, or in a mesh shape. In one embodiment, the anode electrode ANODE is formed as the plurality of stripes or in the mesh shape, and the same voltage Vanode is applied to the entire anode electrode ANODE. The current measuring device 600 is connected to the anode electrode ANODE, and measures the intensity of a current flowing in the anode electrode ANODE. An electron emission device 110 including a cathode electrode, a gate electrode and an anode electrode is formed in a region where the scan line crosses the data line. Here, one of the scan line and the data line is used as the cathode electrode, and the other one of the scan line and the data line is used as the gate electrode.

The data driver 200 transmits a data signal corresponding to input video data DATA to the data lines D1, D2, ..., Dm. In this embodiment, a pulse width modulation (PWM) type data driver will be exemplarily described, but not limited thereto. Alternatively, various data drivers can be employed in the present invention as long as it can control an emission period of the electron emission device 110 in correspondence to the input video data.

The scan driver 300 transmits scan signals to the scan lines S1, S2, ..., Sn in sequence.

The power supply 400 applies a first power (or voltage) VS1 and a second power (or voltage) VS2 to the data driver 200, and a third power (or voltage) VS3 and a fourth power (or voltage) VS4 to the scan driver 300.

The voltage level controller 500 controls at least one of a voltage applied to the cathode or a voltage applied to the gate electrode on the basis of (or in accordance with) the current of the anode electrode ANODE measured by the current measuring device 600. For example, when the measured current becomes lower, the voltage level controller 500 controls the power supply 400 to increase difference between the cathode voltage and the gate voltage when the electrons are emitted. On the other hand, when the measured current becomes higher, the voltage level controller 500 controls the power supply 400 to decrease difference between the cathode voltage and the gate voltage when the electrons are emitted. Then, the power supply 400 changes at least one voltage level of the powers VS1, VS2, VS3 and VS4 applied to the data driver 200 and the scan driver 300 on the basis of the control of the voltage level controller 500. Thus, the data signal from the data driver 200 and/or the scan signal from the scan driver 300 are changed in a voltage level, so that the voltage difference between the gate and cathode electrodes of the electron emission device 110 is changed. In the case that the data line and the scan line are used as the cathode electrode and the gate electrode, respectively, the voltage level controller 500 controls the power supply 400 to decrease the voltage applied from the data driver 200 to the data line, to increase the voltage applied from the scan driver 300 to the scan line, or to perform both these operations when the current becomes lower. On the other hand, in the case that the data line and the scan line are used as the cathode electrode and the gate electrode, respectively, the voltage level controller 500 controls the power supply 400 to increase the voltage applied from the data driver 200 to the data line, to decrease the voltage applied from the scan driver 300 to the scan line, or to perform both these operations when the current becomes higher. Thus, the contrast increases as the difference between the cathode voltage and the gate voltage increases while the electrons are emitted. Further, the power consumption decreases and the durability of the electron emission device 110 improves as the difference between the cathode voltage decreases while the electrons are emitted.

FIG. 2 is a partial sectional view of a display region employed in the electron emission display device according to an embodiment of the present invention.

Referring to FIG. 2, the display region includes an electron emission substrate 120, and an image forming substrate 130. Further, the display region additionally includes a spacer 140 to maintain a uniform space between the electron emission substrate 120 and the image forming substrate 130.

The electron emission substrate 120 includes a rear substrate 121, a cathode electrode 122, an insulating layer 123, a gate electrode 124, and an electron emitter 125 so as to emit electrons corresponding to the voltage difference between the cathode electrode 122 and the gate electrode 124.

The rear substrate 121 includes a glass or silicon substrate, by way of example. Particularly, when the electron emitter 125 is formed by rear exposure using carbon nano tube (CNT) paste, a transparent substrate like a glass substrate may be used as the rear substrate 121.

The cathode electrode 122 having a stripe shape is formed on the rear substrate 121. Here, the cathode electrode 122 receives one of a data signal from a data driver and a scan signal from a scan driver. The cathode electrode 122 can be made of a conductive material. The cathode electrode 122 may be made of a transparent conductive material, e.g., indium tin oxide (ITO), for the same reason as the rear substrate 121.

The insulating layer 123 is formed on the rear substrate 121 and the cathode electrode 122 and electrically insulates the cathode electrode 122 from the gate electrode 124. The insulating layer 123 is made of an insulating material, e.g., a glass material containing a combination of Pb0 and SiO₂.

The gate electrode 124 having a stripe shape is formed on the insulating layer 123, and crosses with the cathode electrode 122. Here, the gate electrode 124 receives the other one of the data signal from the data driver and the scan signal from the scan driver. The gate electrode 124 is made of metal having good conductivity, e.g., at least one of gold (Au), silver (Ag), platinum (Pt), aluminum (Al), chrome (Cr) or alloy thereof. The insulating layer 123 and the gate electrode 124 form at least one first aperture 126 to expose the cathode electrode 122 in a region where the cathode electrode 122 crosses with (or crosses over) the gate electrode 124.

The electron emitter 125 is formed on and electrically connected to the cathode electrode 122 exposed through the first aperture 126. Here, the electron emitter 125 may be made of CNT; a nano tube containing graphite, diamond, diamond-like-carbon or a combination thereof; or a nano wire containing Si or SiC.

The image forming substrate 130 includes a front substrate 131, an anode electrode, a fluorescent material 133, a light shielding layer 134, and a reflection metal layer 135.

The front substrate 131 is made of a transparent material, e.g., a glass, to transmit light from the fluorescent material 133 to the outside.

The anode electrode 132 is made of a transparent material, e.g., an ITO electrode, to transmit the light from the fluorescent material 133 to the outside. The anode electrode 132 effectively accelerates the emission of electrons from the electron emitter 125. For this reason, a high positive voltage (+) is applied to the anode electrode 132, thereby allowing the electrons to be accelerated toward the fluorescent material 133.

The fluorescent material 133 emits light when the electrons emitted from the electron emission substrate 120 collide therewith. The fluorescent material 133 is selectively arranged on the anode electrode 132 at predetermined intervals. For example, a G fluorescent material, i.e., a fluorescent material that emits light for displaying a green color, can include ZnS:Cu, Zn₂SiO₄:Mn, ZnS:Cu+Zn₂SiO₄:Mn, Gd₂O₂S:Tb, Y₃AL₅O₁₂:Ce, ZnS:Cu,Al, Y₂O₂S:Tb, ZnO:Zn, ZnS:Cu,Al+In₂O₃, LaPO₄:Ce,Tb,BaO·6Al₂O₃:Mn, (Zn,Cd)S:Ag, (Zn,Cd)S:Cu,Al,ZnS:Cu,Au,Al, Y₃(Al,Ga)₂O₁₂:Tb, Y₂SiO₅:Tb, or LaOC1:Tb. Further, a B fluorescent material, i.e., a fluorescent material that emits light for displaying a blue color, can include ZnS:Ag, ZnS:Ag,Al, ZnS:Ag,Ga,Al, ZnS: Ag,Cu,GA,Cl, ZnS:Ag+In₂O₃, Ca₂B₅O₉Cl:Eu²⁺, (Sr,Ca,Ba,Mg)₁₀(PO₄)₆Cl₂:Eu²⁺, Sr₁₀(PO₄)₆C₂:Eu²⁺, BaMgAl₁₆O₂₆:Eu²⁺, ZnS:Ag containing CoO,Al₂O₃, ZnS:Ag, or Ga. Also, an R fluorescent material, i.e., a fluorescent material that emits light for displaying a red color, can include Y₂O₂S:Eu, Zn₃(PO₄)₂:Mn, Y₂O₃:Eu, YVO₄:Eu, (Y,Gd)BO₃:Eu, γ-Zn₃(PO₄)₂:Mn, (ZnCd)S:Ag, (ZnCd)S:Ag+In₂O₃, or Y₂O₂S:Eu containing Fe₂O₃.

The light shielding layer 134 absorbs and shuts out external light, and prevents optical crosstalk. Further, the light shielding layer 134 is arranged between the fluorescent materials 133 at predetermined intervals to enhance a contrast.

The reflection metal layer 135 is formed on the fluorescent material 133 and effectively focuses the electrons emitted from the electron emission substrate 120. Therefore, the light emitted from the fluorescent material 133 due to the electron collision is reflected from the reflection metal layer 135 toward the front substrate 131, thereby promoting reflection efficiency. Further, when the reflection metal layer functions as an anode electrode, a separate anode electrode may be selectively provided. In other words, a separate anode electrode may not be needed.

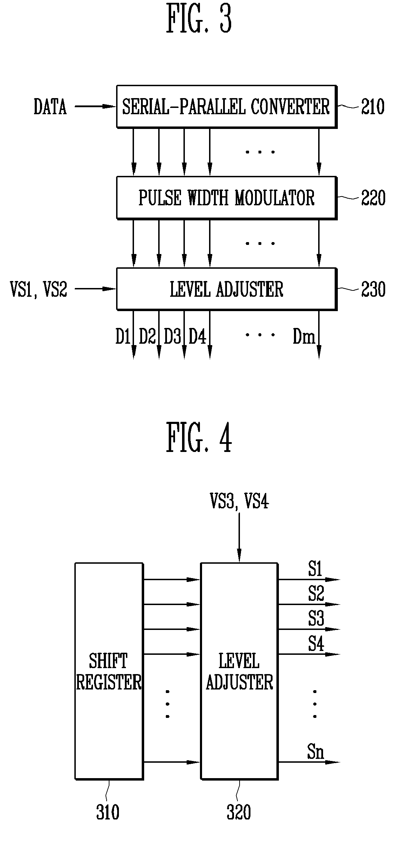

FIG. 3 is a block diagram of a data driver employed in the electron emission display device according to an embodiment of the present invention. As shown in FIG. 3, the data driver includes a serial-parallel converter 210, a pulse width modulator 220, and a level adjuster 230.

The serial-parallel converter 210 converts video data Data inputted in sequence into parallel video data.

The pulse width modulator 220 modulates the pulse width of the parallel video data outputted from the serial-parallel converter 210. For example, the pulse width modulator 220 outputs a data signal having a wide pulse width in the case of the parallel video data corresponding to high gray level, and outputs a data signal having a narrow pulse width in the case of the parallel video data corresponding to low gray level.

The level adjuster 230 adjusts a voltage level of the data signal outputted from the pulse width modulator 220 according to the first power VS1 and the second power VS2 supplied from the power supply 400, and outputs the data signal having the adjusted voltage level to the data lines D1, D2, ..., Dm. Here, the data signal outputted from the level adjuster 230 has a high voltage level corresponding to the first power VS1, and a low voltage level corresponding to the second power VS2. Thus, the high and/or low voltage level of the data signal vary corresponding to the voltage variation of the first power VS1 and/or the voltage variation of the second power VS2. In the case where the data line D1, D2, ..., Dm is employed as the cathode electrode, the electron emission device emits the electrons when the data signal has a low level voltage, i.e., a voltage level corresponding to the second power VS2. Therefore, the power supply varies the voltage level of the second power VS2, thereby varying the voltage difference between the gate electrode and the cathode electrode when the electrons are emitted. At this time, the voltage level of the first power VS1 may be invariable or may be variable corresponding to the voltage variation of the second power VS2. On the other hand, in the case where the data line D1, D2, ..., Dm is employed as the gate electrode, the electron emission device emits electrons when the data signal has a high level voltage, i.e., a voltage level corresponding to the first power VS1. Therefore, the power supply varies the voltage level of the first power VS1, thereby varying the voltage difference between the gate electrode and the cathode electrode when the electrons are emitted. At this time, the voltage level of the second power VS2 may be invariable or may be variable corresponding to the voltage variation of the first power VS1.

Meanwhile, in the case where the voltage level controller controls only the voltage level of the scan signal outputted from the scan driver without controlling the voltage level of the data signal outputted from the data driver, the voltage levels of the first power VS1 and the second power VS2 can be invariable, and the data driver can directly output the data signal from the pulse width modulator 220 to the data lines D1, D2, ..., Dm without the level adjuster 230.

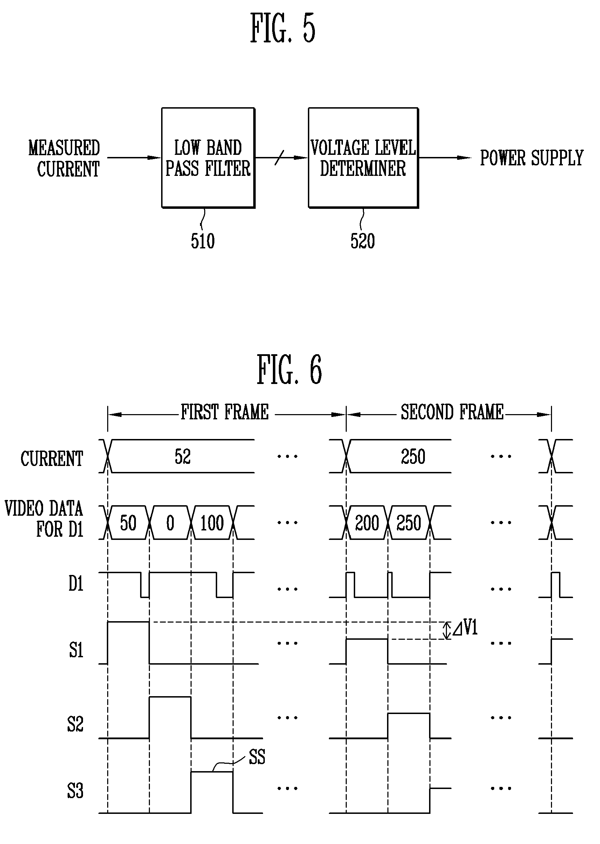

FIG. 4 is a block diagram of a scan driver employed in the electron emission display device according to an embodiment of the present invention. Referring to FIG. 4, the scan driver includes a shift register 310 and a level adjuster 320.

The shift register 310 outputs scan signals in sequence.

The level adjuster 320 adjusts the voltage level of the scan signal outputted from the shift register 310 according to the third power VS3 and the fourth power VS4 supplied from the power supply, and outputs the scan signal having the adjusted voltage level to the scan line S1, S2, ..., Sn. Here, the scan signal outputted from the level adjuster 320 has a high voltage level corresponding to the voltage level of the third power VS3, and a low voltage level corresponding to the voltage level of the fourth power VS4. Thus, the high and/or low level of the scan signal outputted from the level adjuster 320 varies corresponding to the voltage variation of the third power VS3 and/or the voltage variation of the fourth power VS4. In the case where the scan line S1, S2, ..., Sn is employed as the cathode electrode, the electron emission device emits electrons when the scan signal has a low level voltage, i.e., a voltage level corresponding to the fourth power VS4. Therefore, the power supply varies the voltage level of the fourth power VS4, thereby varying the voltage difference between the gate electrode and the cathode electrode when the electrons are emitted. At this time, the voltage level of the third power VS3 may be invariable or may be variable corresponding to the voltage variation of the fourth power VS4. On the other hand, in the case where the scan line S1, S2, ..., Sn is employed as the gate electrode, the electron emission device emits electrons when the data signal has a high level voltage, i.e., a voltage level corresponding to the third power VS3. Therefore, the power supply varies the voltage level of the third power VS3, thereby varying the voltage difference between the gate electrode and the cathode electrode when the electrons are emitted. At this time, the voltage level of the fourth power VS4 may be invariable or may be variable corresponding to the voltage variation of the third power VS3.

In the case where the voltage level controller controls only the voltage level of the data signal outputted from the data driver without controlling the voltage level of the scan signal outputted from the scan driver, the voltage levels of the third power VS3 and the fourth power VS4 can be invariable, and the scan driver can directly output the scan signal from the shift register 310 to the scan lines S1, S2, ..., Sn without the level adjuster 320.

FIG. 5 is a block diagram of a voltage level controller employed in the electron emission display device according to an embodiment of the present invention. Referring to FIG. 5, the voltage level controller includes a low pass filter (or a low band pass filter) 510 and a voltage level determiner 520.

The low pass filter 510 filters a high frequency component from a current measured by the current measuring device. For example, an integrating circuit can be used as the low pass filter 510. The low pass filter 510 may not be used in other embodiments, and the voltage level controller may include only the voltage level determiner 520.

In the described embodiment, the voltage level determiner 520 controls the power supply on the basis of the current outputted from the low pass filter 510. When the current is high, the voltage level determiner 520 controls the power supply to decrease the voltage difference between the cathode electrode and the gate electrode of the electron emission device. When the current is low, the voltage level determiner 520 controls the power supply to increase the voltage difference between the cathode electrode and the gate electrode of the electron emission device.

FIGs. 6 through 8 show waveforms of a data signal and a scan signal which vary according to a current when a data line is used as a cathode electrode and a scan line is used as a gate electrode in the electron emission display device according to an embodiment of the present invention.

FIG. 6 illustrates a case where a voltage difference between the gate electrode and the cathode electrode is varied by changing a voltage level applied to the gate electrode. Referring to FIGs. 1 and 6, the data driver 200 receives video data corresponding to the data signal applied to the 1^{st} data line D1, and outputs the data signal corresponding to the video data to the 1^{st} data line D1. The data signal has a pulse width corresponding to the video data. Here, because the data line D1 is used as the cathode electrode, the pulse of the data signal has a low voltage level. Therefore, as the image data gets higher, the pulse width corresponding to the low voltage level becomes wider. On the other hand, if the data line D1 is used as the gate electrode of the electron emission device, the pulse of the data signal has a high voltage level. The scan driver 300 outputs the scan signals SS to the scan lines S1, S2, ..., Sn in sequence. Here, because the scan line is used as the gate electrode of the electron emission device, the scan signal SS has a high voltage level. On the other hand, if the scan line is used as the cathode electrode of the electron emission device, the scan signal has a low voltage level. In the electron emission display device using the signal waveforms as shown in FIG. 6, the voltage level of the gate electrode, i.e., the voltage level of the scan signal, varies as the current is changed. In more detail, as the current increases from 52 to 250, that is, as the video data includes more high gray level data, the voltage level of the gate electrode decreases by ΔV1. Then, the voltage difference between the gate electrode and the cathode electrode decreases, and thus the electron emission of each electron emission device decreases, thereby decreasing the brightness of each pixel.

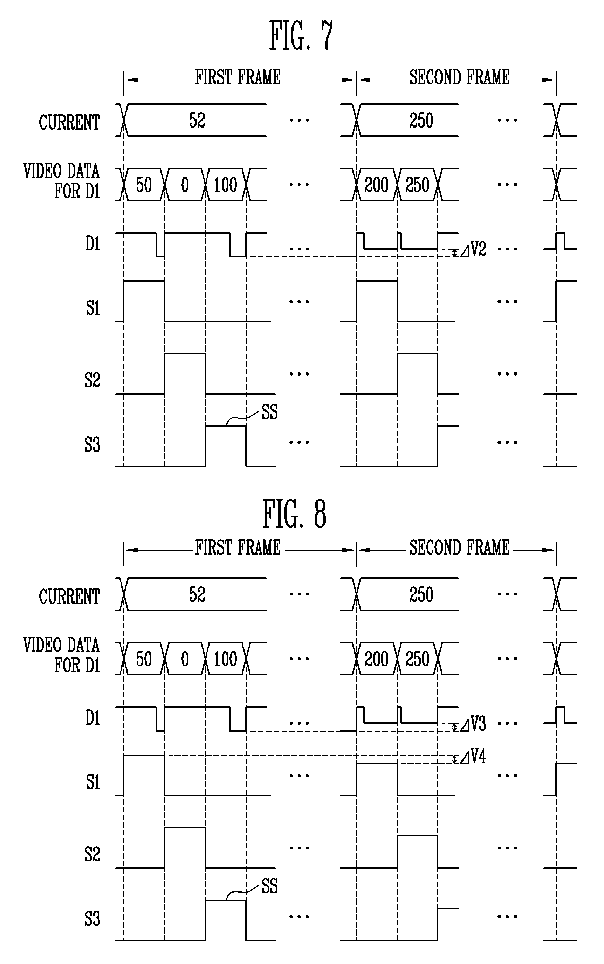

FIG. 7 illustrates a case where a voltage difference between the gate electrode and the cathode electrode is varied by changing a voltage level applied to the cathode electrode. Referring to FIGs. 1 and 7, in the electron emission display device, the voltage level of the cathode electrode, i.e., the voltage level of the data signal, varies as the current is changed. In more detail, as the current increases from 52 to 250, that is, as the video data includes more high gray level data, the voltage level of the cathode electrode increases by ΔV2. Then, the voltage difference between the gate electrode and the cathode electrode decreases, and thus the electron emission of each electron emission device decreases, thereby decreasing the brightness of each pixel. The other signals of FIG. 7 are not different from those of FIG. 6 except that the voltage level of the gate electrode does not decrease by ΔV1 in the second frame unlike FIG. 6, and therefore repetitive descriptions will be avoided.

FIG. 8 illustrates a case where a voltage difference between the gate electrode and the cathode electrode is varied by changing a voltage level applied to the gate electrode and the cathode electrode. Referring to FIGs. 1 and 8, in the electron emission display device, the voltage level of the gate electrode, i.e., the voltage level of the scan signal and the voltage level of the cathode electrode, i.e., the voltage level of the data signal vary as the current is changed. In more detail, as the current increases from 52 to 250, that is, as the video data includes more high gray level data, the voltage level of the cathode electrode increases by ΔV3 and the voltage level of the gate electrode decreases by ΔV4. Then, the voltage difference between the gate electrode and the cathode electrode decreases, and thus the electron emission of each electron emission device decreases, thereby decreasing the brightness of each pixel. The other signals of FIG. 8 are not different from those of FIG. 6, and therefore repetitive descriptions will be avoided.

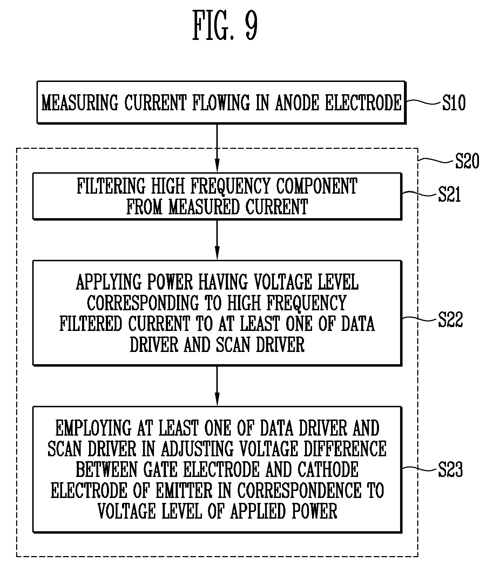

FIG. 9 is a control flowchart of the electron emission display device according to an embodiment of the present invention.

Referring to FIG. 9, a method of controlling the electron emission display device includes operation S10 of measuring a current flowing in the anode electrode, and operation S20 of adjusting the voltage difference between the gate electrode and the cathode electrode on the basis of the measured current.

In the operation S20 of adjusting the voltage difference between the gate electrode and the cathode electrode, the voltage difference between the cathode electrode and the gate electrode of the electron emission device is adjusted corresponding to the current. In the case where the current is low, the voltage difference between the cathode electrode and the gate electrode of the electron emission device is adjusted to become high. On the other hand, in the case where the current is high, the voltage difference between the cathode electrode and the gate electrode of the electron emission device is adjusted to become low. For example, the operation S20 includes operation S21 of filtering the high frequency component from the measured current, operation S22 of applying a power having a voltage level corresponding to the high-frequency-filtered current to at least one of the data driver or the scan driver, and operation S22 of allowing at least one of the data driver or the scan driver to adjust the voltage difference between the cathode electrode and the gate electrode of the electron emission device on the basis of the applied voltage level. Here, the operation S20 of adjusting the voltage difference between the gate electrode and the cathode electrode may not include the operation S21 of filtering the high frequency component from the measured current, and thus, in the operation S22, a power having a voltage level corresponding to the measured current is applied to at least one of the data driver or the scan driver.

In the method of controlling the electron emission display device, each operation can be easily appreciated with reference to the foregoing embodiments of the electron emission display device, so that repetitive descriptions will be avoided for the sake of convenience.

As described above, the present invention provides an electron emission display device and a method of controlling the same, in which a voltage applied between a cathode electrode and a gate electrode is adjusted according to a current flowing in an anode electrode, so that the contrast is improved in the case of a low current, and power consumption is limited and an electron emission device is prevented from deterioration in the case of a high current.

While the invention has been described in connection with certain exemplary embodiments, it is to be understood by those skilled in the art that the invention is not limited to the disclosed embodiments, but, on the contrary, is intended to cover various modifications included within and scope of the appended claims and equivalents thereof.

## Claims

1. An electron emission display device comprising:
a display region comprising an anode electrode, and a plurality of electron emission devices disposed at electron emission regions defined by a plurality of data lines and a plurality of scan lines;
a data driver for supplying a data signal corresponding to video data to the plurality of data lines;
a scan driver for supplying scan signals to the plurality of scan lines;
a power supply for supplying power to the data driver and the scan driver;
a current measuring device for measuring a current in the anode electrode; and
a voltage level controller, the voltage level controller being arranged for controlling a voltage difference between a cathode electrode and a gate electrode of at least one of the electron emission devices on a basis of the current
and/or
the voltage level controller being arranged for controlling a voltage level of the power supplied from the power supply to at least one of the data driver or the scan driver to be varied on a basis of the current.

2. The electron emission display device according to claim 1, wherein the voltage level controller is arranged to control the voltage difference by varying at least one of a voltage applied to the cathode electrode or a voltage applied to the gate electrode on the basis of the current.

3. The electron emission display device according to at least one of the claims 1 or 2, wherein the voltage level controller is arranged to control the voltage difference to be lowered as the current becomes higher.

4. The electron emission display device according to at least one of the preceding claims, wherein the voltage level controller is arranged to control the power supplied from the power supply to have a voltage level corresponding to the current, and at least one of the data driver or the scan driver is arranged to vary the voltage level of the data signal and/or the scan signal on a basis of a voltage variation of the supplied power.

5. The electron emission display device according to at least one of the preceding claims, wherein the data driver is arranged to supply the data signal allowing an electron emission period of the at least one of the electron emission devices to be determined corresponding to the video data.

6. The electron emission display device according to at least one of the preceding claims, wherein the data driver is arranged such that the data signal is obtained by applying pulse width modulation to the video data.

7. The electron emission display device according to at least one of the preceding claims, wherein one of the data lines corresponds to one of the cathode electrode and the gate electrode, and one of the scan lines corresponds to the other one of the cathode electrode and the gate electrode or wherein the data line corresponds to one of the cathode electrode and the gate electrode, and the scan line corresponds to the other one of the cathode electrode and the gate electrode.

8. The electron emission display device according to at least one of the preceding claims, wherein the voltage level controller comprises:
a low pass filter arranged to filter a high frequency band signal from the current;
a voltage level determiner arranged to control the power supply in correspondence to the current passed through the low pass filter.

9. The electron emission display device according to at least one of the preceding claims, wherein the data driver is arranged to adjust a voltage level of the data signal on a basis of the power supplied from the power supply.

10. The electron emission display device according to at least one of the preceding claims, wherein the data driver comprises:
a serial-parallel converter adapted to convert the video data inputted in sequence into parallel video data;
a pulse width modulator adapted to modulate a pulse width of the parallel video data; and
a level adjuster adapted to adjust a voltage level of the data signal outputted from the pulse width modulator according to the power supplied from the power supply, and output the data signal having the adjusted voltage level to at least one of the data lines.

11. The electron emission display device according to at least one of the preceding claims, wherein the scan driver is arranged to adjust a voltage level of at least one of the scan signals on a basis of the power supplied from the power supply.

12. The electron emission display device according to at least one of the preceding claims, wherein the scan driver comprises:
a shift register adapted to output the scan signals; and
a level adjuster adapted to adjust a voltage level of the scan signals outputted from the shift register on a basis of the power supplied from the power supply, and output the scan signals having the adjusted voltage level to at least one of the scan lines.

13. A method of controlling an electron emission display device, the method comprising:
measuring a current in an anode electrode; and
adjusting a voltage difference between a cathode electrode and a gate electrode of an electron emission device on a basis of the current.

14. The method according to claim 13, wherein the step of adjusting a voltage difference comprises:
supplying power having a voltage level corresponding to the current to at least one of a data driver or a scan driver; and
allowing at least one of the data driver or the scan driver to adjust the voltage difference on a basis of the supplied power.

15. The method according to claim 13, wherein the step of adjusting a voltage difference comprises:
filtering the current through a low pass filter;
supplying power having a voltage level corresponding to the current passed through the low pass filter to at least one of a data driver or a scan driver; and
allowing at least one of the data driver or the scan driver to adjust the voltage difference on a basis of the supplied power.

16. The method according to claim 13, wherein the voltage difference is controlled to become larger when the current is low, and the voltage difference is controlled to become smaller when the current is high and/or wherein the voltage difference is controlled by varying at least one of a voltage applied to the gate electrode or a voltage applied to the cathode electrode on the basis of the current.

17. The method according to at least one of the claims 13-16, wherein one of a data signal and a scan signal is applied to the gate electrode, and the other one is applied to the cathode electrode and/or wherein the data signal is obtained by applying pulse width modulation to the video data.
